(19) Europäisches Patentamt
European Patent Office
Office européen des brevets

(11) **EP 2 418 793 A1**

(12) **EUROPEAN PATENT APPLICATION**
published in accordance with Art. 153(4) EPC

(43) Date of publication:
**15.02.2012 Bulletin 2012/07**

(51) Int Cl.:
*H04J 11/00* $^{(2006.01)}$        *H04L 27/01* $^{(2006.01)}$
*H04W 72/04* $^{(2009.01)}$

(21) Application number: **10761580.9**

(22) Date of filing: **19.03.2010**

(86) International application number:
**PCT/JP2010/054782**

(87) International publication number:
**WO 2010/116880 (14.10.2010 Gazette 2010/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.04.2009  JP 2009096492**

(71) Applicant: **NEC Corporation**
**Tokyo 108-8001 (JP)**

(72) Inventors:
• **INOUE Takamichi**
**Tokyo 108-8001 (JP)**

• **KOYANAGI Kenji**
**Tokyo 108-8001 (JP)**
• **KAKURA Yoshikazu**
**Tokyo 108-8001 (JP)**

(74) Representative: **MacDougall, Alan John Shaw et al**
**Mathys & Squire LLP**
**120 Holborn**
**London**
**EC1N 2SQ (GB)**

(54) **WIRELESS COMMUNICATION SYSTEM, BASE STATION, TERMINAL, WIRELESS COMMUNICATION METHOD, AND PROGRAM**

(57)    Provided is a wireless communication technique capable of supporting communication using a single component carrier, and communication using a plurality of component carriers. The communication using the plurality of carriers is **characterized by** using a different signal sequence in each of the carriers, and using the signal sequences as reference signals.

## FIG. 2

**Description**

[TECHNICAL FIELD]

The present invention relates to a signal processing of wireless communication employing a plurality of carriers.

[BACKGROUND ART]

The access technique of an uplink of Long Term Evolution (LTE), of which standardization in 3rd Generation Partnership Project (3GPP) is in a convergence phase, adopts Single Carrier-Frequency Division Multiplexing Access (SC-FDMA) (with a configuration of transmitter for performing a subcarrier mapping in a frequency domain, it is also referred to as Discrete Fourier Transform-Spread-Orthogonal Frequency Division Multiplexing (DFT-S-OFDM)). As its reason, it can be listed that coverage can be enlarged because Peak to Average Power Ratio (PAPR) is small. Additionally, with the allocation of resource blocks in SC-FDMA, only the resource blocks (RB) that are continuous in a frequency axis are allocated. Herein, the resource block is configured of a plurality of subcarriers, and one resource block is configured of 12 subcarriers in LTE.
A Constant Amplitude Zero Auto-Correlation (CAZAC) sequence **characterized in that** PAPR is small is adopted as reference signals of the LTE uplink. The CAZAC sequence is a sequence of which amplitude is constant in both the time domain and the frequency domain, and yet of which an autocorrelation value is zero except for a phase difference being zero. PAPR of the CAZAC sequence is suppressed at a small level because the amplitude is constant in the time domain, and yet the CAZAC sequence is suitable for estimating channels in the frequency domain because the amplitude is constant also in the frequency domain. The sequence number of the CAZAC sequence depends upon a sequence length thereof. For example, there exists a Zadoff-Chu sequence that is represented by Equation 1 adopted in LTE as one of the CAZAC sequences (see Non-Patent literature 1).

(Equation 1)

$$c_q^L(n) = \exp(-j\pi q n(n+1)/L) \qquad n = 0, \cdots, L\text{-}1$$

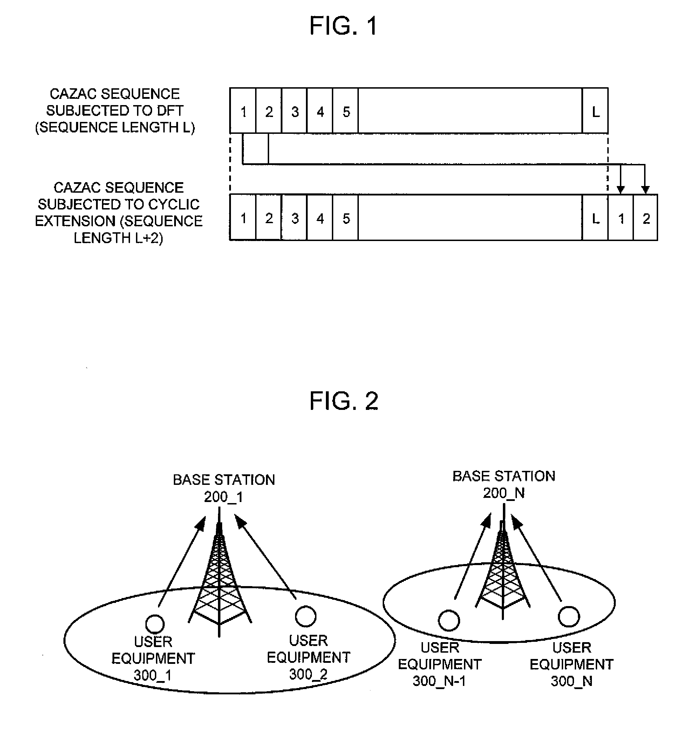

In the Zadoff-Chu sequence, it is when the sequence length becomes a prime number L that the sequence number is maximized, and the sequence length thereof becomes L-1. In LTE, the sequence obtained by subjecting the Zadoff-Chu sequence having a prime number length to cyclic extension is employed in order to secure the sequence number of the CAZAC sequence. As shown in Fig. 1, the cyclic extension technique is a technique of extending the sequence length of the Zadoff-Chu sequence in the frequency domain to the number of the subcarriers of data signals. Employing the cyclic extension technique makes it possible to secure many kinds of the sequence lengths without largely damaging properties of the above-described CAZAC sequence. Hereinafter, the reference signal sequence to be employed for LTE is described as the CAZAC sequence.
The specification of LTE specifies 30 kinds of CAZAC sequence groups including the CAZAC sequence each having a different sequence length, and allocates one CAZAC sequence group in each cell. Additionally, when the CAZAC sequence group differs, the different CAZAC sequence is employed without fail because one CAZAC sequence belongs only to one certain CAZAC sequence group. Further, in the current situation, the sequence length that the CAZAC sequence groups support is 20 MHz, being a maximum bandwidth of LTE, or less.

Non-PATENT LITERATURE 1: B. M. Popovic, "Generalized Chirp-Like Polyphase Sequences with Optimum Correlation Properties," IEEE Transactions on Information Theory, Vol. 38, No.4, pp1406-1409, July 1992.

[SUMMARY OF INVENTION]

[TECHNICAL PROBLEM]

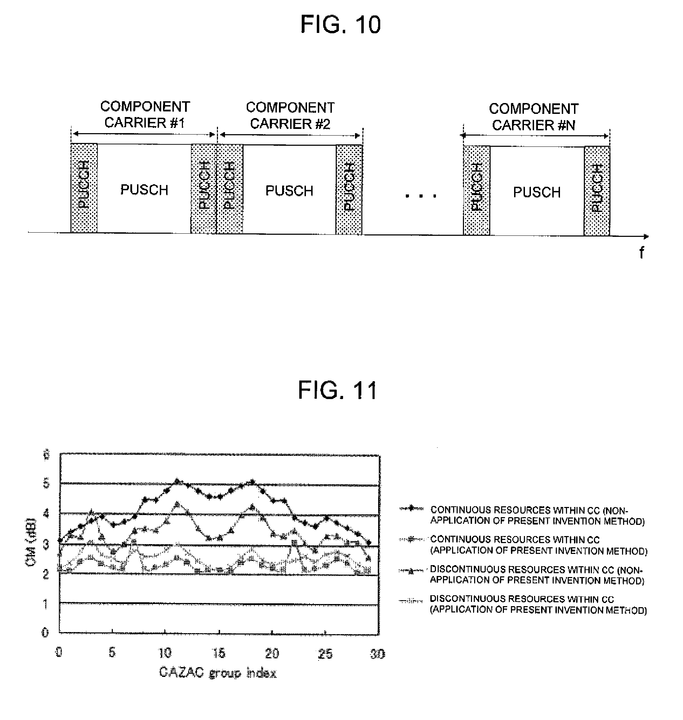

Currently, in 3GPP, the standardization of LTE-Advanced, being a next generation of LTE, is in progress, and the downlink of 1 Gbps or so and the uplink of 500 Mbps or so are required as a maximum communication speed of LTE-Advanced. For this reason, LTE-Advanced demands a system bandwidth wider than 20 MHz of LTE. Thereupon, a technology of aggregating component carries (they are also called carriers, and the bandwidth thereof is 20 MHz at maximum) employed in the conventional LTE in plural number, which is called carrier aggregation, is employed.
It has been agreed in LTE-Advanced that a physical channel configuration common to LTE is employed. Thus, in the physical channel configuration of the LTE-Advanced uplink, as shown in Fig. 10, Physical Uplink Control Channel (PUCCH) to be employed for transmitting control signals is located in both ends of the component carrier. This causes Physical Uplink Shared Channel (PUSCH) being employed for transmitting data to employ the resource blocks that are discontinuous in the frequency axis. From the background described above, the access technique of the LTE-Advanced uplink employs N x DFT-S-OFDM employing a plurality of DFTs in the case of the communication employing a plurality of the component carriers (carrier aggregation). Where, N is the number of the component carriers that are aggregated.

Further, the uplink access technique within one certain component carrier for performing the carrier aggregation is expanded so that an allocation of the resource blocks that are discontinuous in the frequency axis is enabled in order to enhance a multiuser diversity effect by a channel-dependent scheduling method. Herein, the so-called channel-dependent scheduling method is a method of allocating the resource blocks to user equipments that are excellent in a channel quality of the frequency domain in an environment of becoming a frequency-selective fading channel. That is, while the above method employs one DFT within one component carrier similarly to LTE, it employs Clustered DFT-S-OFDM capable of allocating resource blocks that are discontinuous in the frequency axis.

Further; it is listed as a request condition of the LTE-Advanced system that LTE-Advanced base stations also support LTE user equipments that correspond only to the access technique of SC-FDMA. That is, it is necessary for the LTE user equipments to be able to make communication in any cell of the LTE-Advanced base station and LTE base station without causing a problem.

When the system for expanding the transmission band by employing the carrier aggregation is configured to employ the identical reference signal sequence for a plurality of the component carriers so that the user equipments or the base stations as well for making communication by employing a single component carrier are caused to cope, a problem that PAPR becomes large surfaces. The reason is that the case of performing coherent addition for the identical signal occurs because the reference signal to be employed in each component carrier is identical.

An object of the present invention is to provide a wireless communication technology that can cope with the communication employing a single component carrier, and the communication employing a plurality of component carriers.

[SOLUTION TO PROBLEM]

The present invention for solving the above-mentioned problems is a wireless communication system, which is characterized in employing a different signal sequence in each carrier in communication employing a plurality of carriers, and employing the aforementioned signal sequence as reference signals.

The present invention for solving the above-mentioned problems is a base station, which is characterized in employing a different signal sequence in each carrier in communication employing a plurality of carriers, and employing the aforementioned signal sequence as reference signals.

The present invention for solving the above-mentioned problems is a terminal, which is characterized in employing a different signal sequence in each carrier in communication employing a plurality of carriers, and employing the aforementioned signal sequence as reference signals.

The present invention for solving the above-mentioned problems is a wireless communication method, which is characterized in employing a different signal sequence in each carrier in communication employing a plurality of carriers, and employing the aforementioned signal sequence as reference signals.

The present invention for solving the above-mentioned problems is a program of a base station, which is characterized in causing the aforementioned base station to execute a process of employing a different signal sequence in each carrier in communication employing a plurality of carriers, and employing the aforementioned signal sequence as reference signals.

The present invention for solving the above-mentioned problems is a program of a terminal, which is characterized in causing the aforementioned terminal to execute a process of employing a different signal sequence in each carrier in communication employing a plurality of carriers, and employing the aforementioned signal sequence as reference signals.

[ADVANTAGEOUS EFFECT OF INVENTION]

The present invention makes it possible to cope with the communication employing a single component carrier and the wireless communication employing a plurality of the component carriers.

[BRIEF DESCRIPTION OF DRAWINGS]

[Fig. 1] Fig. 1 is a view for explaining the cyclic extension.

[Fig. 2] Fig. 2 is a schematic view of the wireless communication system of the present invention.

[Fig. 3] Fig. 3 is a block diagram illustrating a main configuration of the base station in the wireless communication system for which the exemplary embodiment has been applied.

[Fig. 4] Fig. 4 is s a block diagram illustrating a main configuration of the user equipment in the wireless communication system for which the exemplary embodiment has been applied.

[Fig. 5] Fig. 5 is a view illustrating the method of transmitting the CAZAC sequences in the exemplary embodiment.

[Fig. 6] Fig. 6 is a view illustrating the method of transmitting control signals associated with the reference signal transmission in an example 1 of the exemplary embodiment.

[Fig. 7] Fig. 7 is a view illustrating the method of transmitting control signals associated with the reference signal transmission in an example 2 of the exemplary embodiment.

[Fig. 8] Fig. 8 is a view illustrating the method of transmitting control signals associated with the reference signal transmission in an example 3 of the exemplary embodiment.

[Fig. 9] Fig. 9 is a view illustrating the method of transmitting control signals associated with the reference signal transmission in the example 4 of the exemplary embodiment.

[Fig. 10] Fig. 10 is a view illustrating a physical channel configuration of LTE-Advanced.

[Fig. 11] Fig. 11 is a view for explaining effects of the present invention.

[Fig. 12] Fig. 12 is a flowchart for explaining an operation of the present invention.

[DESCRIPTION OF EMBODIMENTS]

Next, the wireless communication system in accordance with the present invention will be explained by making a reference to the accompanied drawings.

The best mode in accordance with the present invention is characterized in employing a different signal sequence in each of the component carriers for performing uplink transmission.

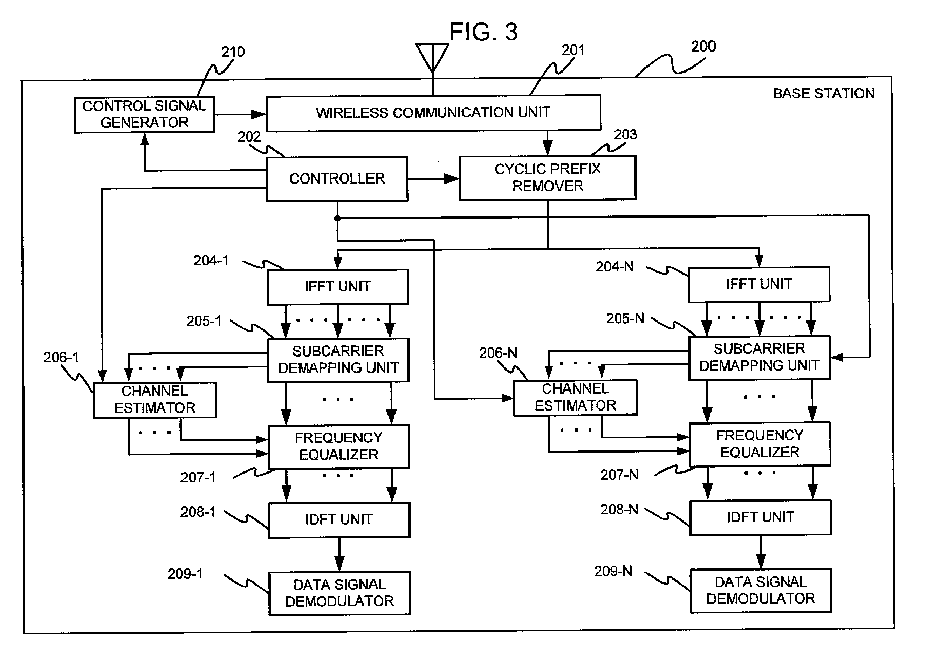

Fig. 2 is a schematic view of the wireless communication system of the present invention. As shown in Fig. 2, the wireless communication system of the present invention includes a plurality of base stations and a plurality of user equipments (UE). While two base stations and two user equipments are described in Fig. 2, respectively, the number of the base stations and the number of the user equipments are not limited hereto, and it is enough that the wireless communication system includes at least one base station and at least one user equipment, respectively. Fig. 3 is a block diagram illustrating a schematic configuration of the base station in the exemplary embodiment of the present invention. Herein, an example of the case that the number of the component carries for performing the carrier aggregation is N is shown.

The base station 200 includes a wireless communication unit 201, a controller 202, a cyclic prefix remover 203, IFFT units 204, subcarrier demapping units 205, channel estimators 206, frequency equalizers 207, IDFT units 208, data signal demodulators 209, and a control signal generator 210.

The wireless communication unit 201 of the base station 200 receives the reference signals and the data signals coming from the user equipments. The wireless communication unit 201 outputs the received reference signals and data signals to the cyclic prefix remover 203. Additionally, while explanation is made hereinafter by mainly supposing demodulation reference signals, the signals could be other signals such as Sounding reference signals and RACH (Random Access Channel) preambles.

The controller 202 controls the cyclic prefix remover 203, the subcarrier demapping units 205-1 to 205-N, and the control signal generator 210, respectively. The controller 202 notifies the CAZAC sequence group indexes being employed in each component carrier to the control signal generator 210.

The cyclic prefix remover 203 removes cyclic prefixes based upon information such as cyclic prefix lengths inputted from the controller 202, and outputs the signals for each signal of the component carrier to the IFFT units 204-1 to 204-N, respectively.

The IFFT units 204-1 to 204-N convert the signals of the time domain into the signals of the frequency domain, and output the converted signals to the subcarrier demapping units 205-1 to 205-N, respectively.

The subcarrier demapping units 205-1 to 205-N recover the subcarrier-mapped subcarriers to an original state by employing resource allocation information inputted from the controller 202, and outputs the reference signals to the channel estimators 206-1 to 260-N, and the data signals to the frequency equalizers 207-1 to 207-N, respectively

The channel estimators 206-1 to 260-N multiply the received reference signal sequence by a conjugate of the known reference signals. With it, the channel estimators 206-1 to 260-N estimate frequency response characteristics of the channel, and output the estimated frequency response characteristics of the channel to the frequency equalizers 207-1 to 207-N.

The frequency equalizers 207-1 to 207-N perform frequency domain equalization for compensating a fluctuation in the amplitude and a fluctuation in the phase due to the fading of the channel by employing the inputted data signals and frequency response characteristics of the channel, and output an equalization result to the IDFT units 208-1 to 208-N.

The IDFT units 208-1 to 208-N convert the signals of the frequency domain into the signals of the time domain, and output the converted signals to the data signal demodulators 209-1 to 209-N.

The data signal demodulators 209-1 to 209-N demodulate the data signals transmitted by respective component carriers.

The control signal generator 210 generates the control signals based upon information associated with the CAZAC sequence group that is employed for the reference signals of the uplink inputted from the controller 202, and resource allocation information associated with the resource allocation. The generated control signals are transmitted to the user equipments via the wireless communication unit 201. The resource allocation information includes information of the component carriers to be used, allocation information indicative of the allocation of the resources in each component carrier, and CAZAC sequence group indexes to be employed in each component carrier. With the CAZAC sequence group, the CAZAC sequences of which the sequence length differs for each CAZAC sequence group are specified. That is, one CAZAC sequence belongs only to one certain CAZAC sequence group. Thus, it follows that when the CAZAC sequence group differs, the different CAZAC sequence is employed without fail. In such a manner, while the case of employing the CAZAC sequence groups in conformity to the specification of LTE is explained in the following, a configuration in which the base stations notify the CAZAC sequence being used to the user equipments may be employed in some case, and the CAZAC sequence being used may be previously stored in a storage unit of a CAZAC sequence number generator 304 to be described later in some cases.

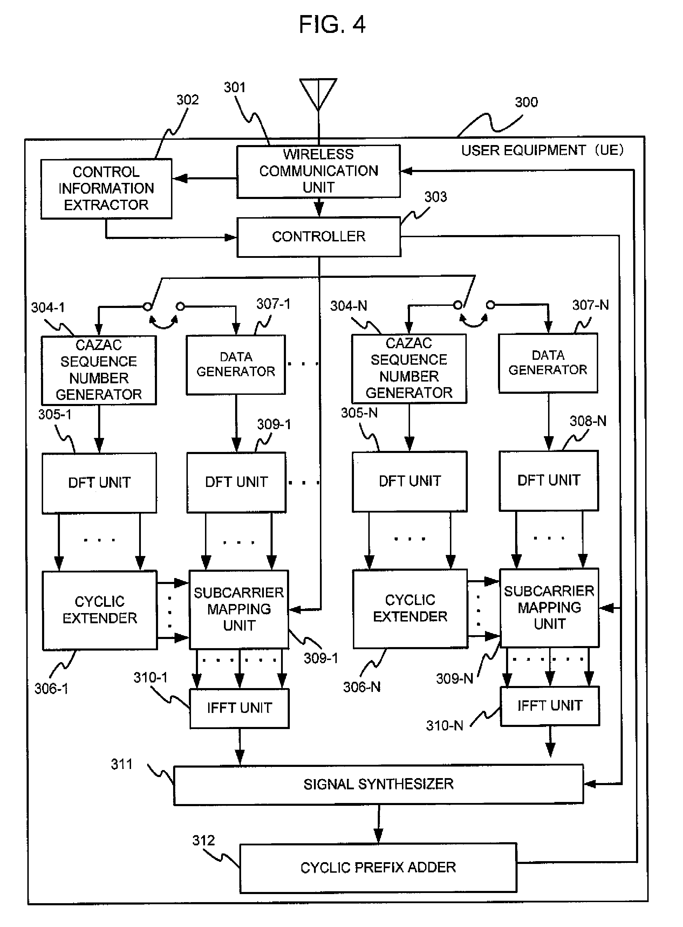

Fig. 4 is a block diagram illustrating a schematic configuration of the user equipment in the exemplary embodiment of the present invention. Herein, an example of the case that the number of the component carries for performing the carrier aggregation is N is shown.

In Fig. 4, a user equipment 300 includes a wireless communication unit 301, a control information extractor 302, a controller 303, CAZAC sequence number generators 304, DFT units 305, cyclic extenders 306, data generators 307, DFT units 308, subcarrier mapping units 309, IFFT units 310, a signal synthesizer 311, and a cyclic prefix adder 312.

The wireless communication unit 301 outputs the downlink control signals received from the base stations 200 to the control information extractor 302.

The control information extractor 302 extracts the information associated with the CAZAC sequence groups, and the resource allocation information associated with the resource allocation, and outputs the extracted information to the controller 303.

The controller 303 controls the CAZAC sequence number generators 304-1 to 304-N, the data generators 307-1 to 307- N, the subcarrier mapping units 309-1 to 309-N, and the cyclic prefix adder 312, respectively.

The CAZAC sequence number generators 304-1 to 304-N generate the CAZAC sequence number by employing the different CAZAC sequence group index in each component carrier, according to the information associated with the CAZAC sequence groups and the information associated with the resource allocation inputted from the controller 303, and output the CAZAC sequence number to DFT units 305-1 to 305-N, respectively. The CAZAC sequence number generator 304 can grasp the number of the resource blocks allocated to its own terminal component carrier by component carrier from the resource allocation information. With LTE, when it is assumed that the number of the resource blocks allocated to a certain component carrier is n, it follows that the sequence length of the reference signals corresponding to the bandwidth of the data signals is $12 \times n = 12n$ because one resource block is configured of 12 subcarriers. Thus, the CAZAC sequence number generator 304 generates the CAZAC sequence number defined as the sequence length being 12n by the CAZAC sequence group index inputted from the controller 303. For example, upon explaining by employing the sequences shown in the Non-Patent Literature 1 on the assumption that the number of the resource blocks allocated to a certain component carrier is 3, the number of the subcarriers of the data signals is 12n, namely, $12 \times 3 = 36$, whereby the CAZAC sequence number generator 304 generates CAZAC sequence of which the sequence length is L=31, being a maximum prime number of 36. At this time, the sequence number is 31-1=30 because the sequence number is (the sequence length -1).

The DFT units 305-1 to 305-N convert the signals of the time domain into the signals of the frequency domain, and output the converted signals to the cyclic extenders 306-1 to 306-N.

The cyclic extenders 306-1 to 306-N output the reference signals, being the CAZAC sequences expanded for each component carrier to the number of the subcarriers of the data signals by employing the CAZAC sequences generated by the CAZAC sequence number generator 304, to the subcarrier mapping units 309-1 to 309-N, respectively. The sequence length of the data signals can be grasped from the resource allocation information inputted from the controller 303. For example, when it is assumed that the number n of the resource blocks allocated to a certain component carrier is three, the number of the subcarriers of the data signals, as described above, is 36. As also shown in Fig. 1, the cyclic extender 306 expands the number of the subcarriers so that it becomes 36 by employing the CAZAC sequence generated by the CAZAC sequence number generator 304, of which the sequence number is 31. Additionally, the CAZAC sequences subjected to the cyclic extension in the frequency domain may be previously stored in a storage unit of the CAZAC sequence number generators 304-1 to 304-N. In this case, the DFT units 305-1 to 305-N and the cyclic extenders 306-1 to 306-N are unnecessary. Additionally, while this explanation is made by employing a configuration of notifying the CAZAC sequence number via the CAZAC sequence number generators 304 and the DFT units 305, a configuration of notifying the CAZAC sequence number from the controller 303 may be employed.

The data signal generators 307-1 to 307-N generate the data for each component carrier under control of the controller 303, and output the data to the DFT units 308-1 to 308-N, respectively.

The DFT units 308-1 to 308-N convert the data signals of the time domain into the date signals of the frequency domain, and input the converted signals into the subcarrier mapping units 309-1 to 309-N.

The subcarrier mapping units 309-1 to 309-N map the data signals and the reference signals to the subcarriers by employing the information associated the resource allocation inputted from the controller 303, and output to the IFFT units 310-1 to 310-N. Herein, Clustered DFT-S-OFDM, differently from SC-FDMA, can map the signals to the discontinuous resource blocks as well.

The IFFT units 310-1 to 310-N convert the signals of the frequency domain into the signals of the time domain, and output the converted signals to the signal synthesizer 311.

The signal synthesizer 311 synthesizes the generated signals for each component carrier, and outputs the synthesized signals to the cyclic prefix adder 312.

The cyclic prefix adder 312 adds the cyclic prefixes under control of the controller 303. Thereafter, the cyclic prefix adder 312 transmits the generated signals to the base stations via the wireless communication unit 301.

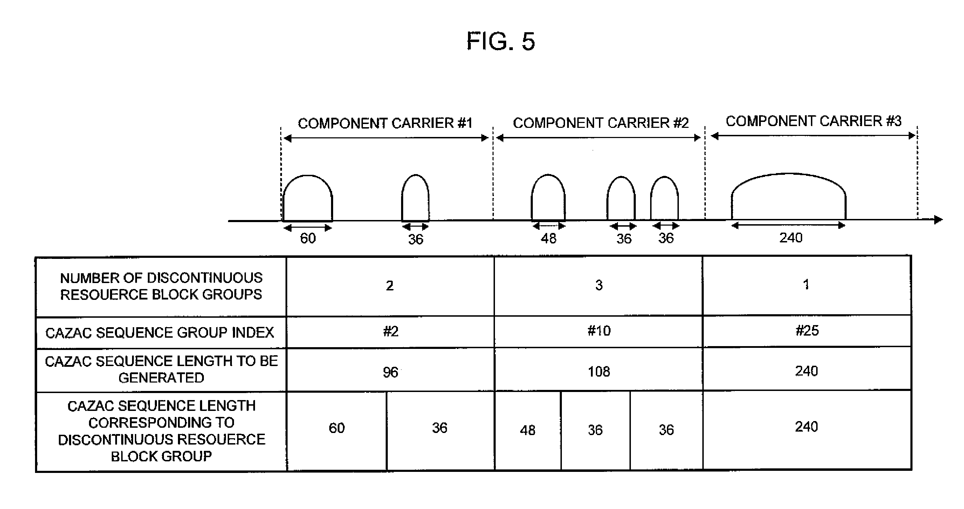

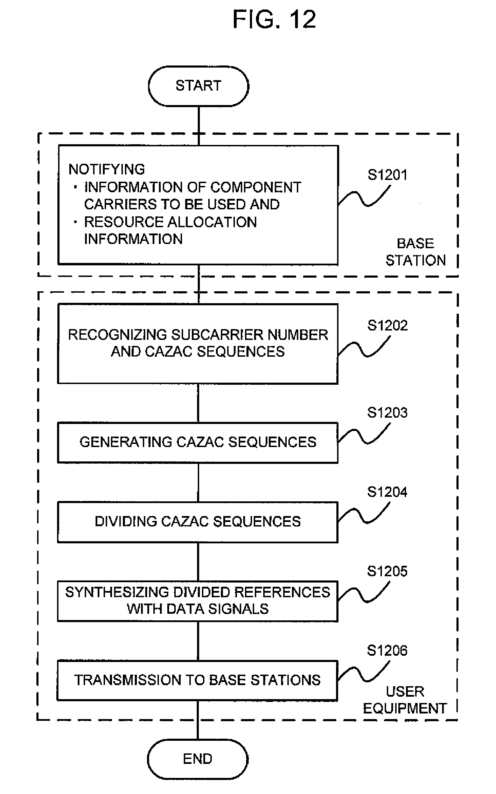

Next, an operation of transmitting the CAZAC sequences associated with the exemplary embodiment will be explained by employing Fig. 5 and Fig. 12.

The control signal generator 210 of the base stations writes down the information associated with the CAZAC sequence groups and the resource allocation information associated with the resource allocation into the control signals, and transmits them (step S1201).

The user equipments recognize the number of the subcarriers and the CAZAC sequences (step S1202). Herein, the user equipments recognize that control information received from the base stations indicates that three component carriers #1 to #3 are used in the carrier aggregation. Further, it is assumed that the user equipments has recognized from the resource allocation information that two discontinuous resource block groups of which the continuous resource blocks are 5 and 3 have been allocated to the component carrier #1. Likewise, it is assumed that the user equipments has recognized that three discontinuous resource block groups of which the continuous resource blocks are 4, 3 and 3 have been allocated to the component carrier #2, and one discontinuous resource block group of which the continuous resource block is 20 has been allocated to the component carrier #3. Further, it is assumed that the base stations have notified that a different CAZAC sequence group index is employed in each component carrier in such a manner that the CAZAC sequence group index (which is also called a group number) of #2 is employed in the component carrier #1, the CAZAC sequence group index of #10 is employed in the component carrier #2, and the CAZAC sequence group index of #25 is employed in the component carrier #3. Additionally, the method of transmitting the control signals associated with the setting of the CAZAC sequence group indexes will be explained in details in the examples described below.

Specifically, a total of the subcarrier number of the component carrier #1 becomes 96 because the resource block of which the subcarrier number is 60 and the resource block of which the subcarrier number is 36 haven been allocated to the component carrier #1. Thus, the subcarrier number of the data signals becomes 96, and the user equipments generate the CAZAC sequence with a sequence length 96 defined within the group of the CAZAC sequence group index #2 that is employed in the component carrier #1 (step S1203). And, the user equipments divide the reference signal, being the generated CAZAC sequence, into the sequence with a sequence length 60 and the sequence with a sequence length 36 (step S1204). And, the user equipments synthesize the divided sequences with the data signals (step S1205) and transmit the synthesized signals in an identical band (step S 1206). At this time, the data signals and the reference signals are subjected to Time Division Multiplexing (TDM).

Likewise, the user equipments generate the CAZAC sequence with a sequence length 108 defined within the group of the CAZAC sequence group index #10 that is employed in the component carrier #2 because in the component carrier #2, the subcarrier number becomes 108 (step S1203). And, the user equipments divide the generated CAZAC sequence into the sequence with a sequence length 48, the sequence with a sequence length 36, and the sequence with a sequence length 36 (step S1204). And, the user equipments synthesize the divided sequences with the data signals (step S1205), and transmit the synthesized signals in an identical band (step S1206). Further, the user equipments generate the CAZAC sequence with a sequence length 240 defined within the group of the CAZAC sequence group index #25 that is employed in the component carrier #3 because in the component carrier #3, the subcarrier number becomes 240 (step S1203). And, the user equipments divide the reference signal, being the generated CAZAC sequence (step S1204). However, the user equipments synthesize the sequences with the data signals without dividing it because no discontinuous resource block group exists in the component carrier #3 (step S1205), and transmit the synthesized signals in an identical band (step S1206).

(Example 1)

The example 1 of the best embodiment will be explained below. The example 1 notifies the information associated with the CAZAC sequence groups to be used, through the control signals of respective component carriers. For example, the control signal generator 210 of the base station 200 writes down the information of the CAZAC sequence group indexes being used into the control signals that are transmitted with the resource blocks of Physical Downlink Shared Channel (PDSCH) to be designated by Physical Broadcast Channel (PBCH). Further, the control signal generator 210 may write down the CAZAC sequence group indexes that are used into PBCH.

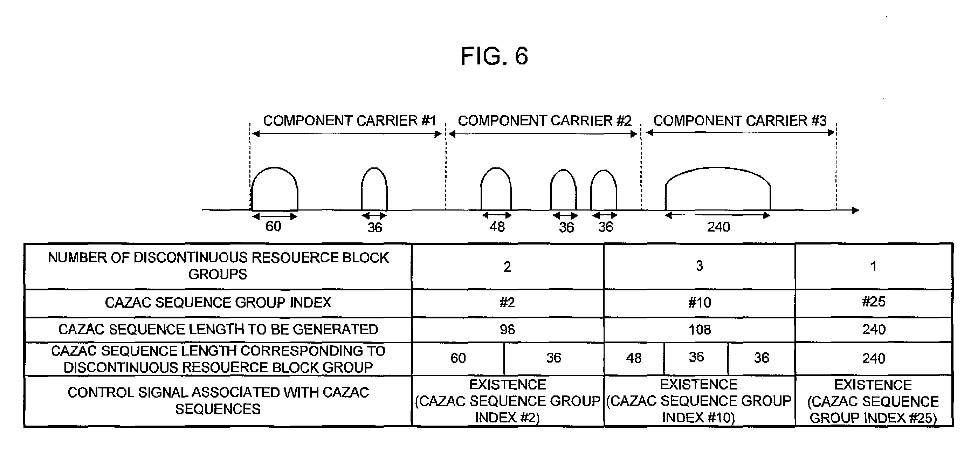

The example 1 will be specifically explained by employing Fig. 6. The example 1 notifies the CAZAC sequence group indexes by employing respective component carriers. That is, in the component carriers #1, #2 and #3, #2, #10 and #25, being the CAZAC sequence group indexes, are notified, respectively.

The control information extractor 302 of the user equipment 300 recognizes the component carriers #1 to #3 that are used in its own station, and extracts the CAZAC sequence group index #2 with the component carrier #1, the CAZAC sequence group index #10 with the component carrier #2, and the CAZAC sequence group index #25 with the component carrier #3 from respective component carriers, and notifies the extracted indexes to the controller 303.

The example 1 is high in commonality with LTE in all of the component carriers. Thus, the user equipments of LTE can make communication in all of the component carriers because the CAZAC sequence group is notified for each component carrier similarly to the current LTE.

(Example 2)

The example 2 will be explained below. The example 2 notifies the information associated with the CAZAC sequence groups to be used, through one certain component carrier. For example, the control signal generator 210 of the base station 200 writes down the CAZAC sequence group indexes being used into the control information that is transmitted with the resource blocks of PDSCH to be designated by PBCH of one certain component carrier. Further, the control signal generator 210 may write down the CAZAC sequence group indexes that are used into PBCH.

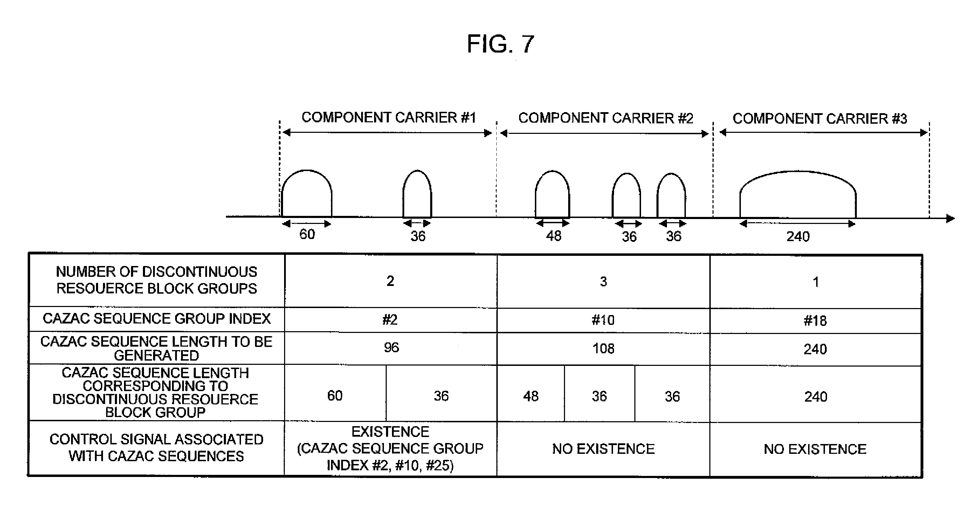

The example 2 will be specifically explained by employing Fig. 7. Herein, the case of transmitting the control information with the component carrier #1 is explained. Thus, the example 2 notifies #2, #10 and #25, being the CAZAC sequence group indexes that are used in the component carriers #1, #2 and #3, through PDSCH of the component carrier #1,

The control information extractor 302 of the user equipment 300 recognizes the component carriers #1 to #3 that are used in its own station, and extracts the CAZAC sequence group index #2 with the component carrier #1, the CAZAC sequence group index #10 with the component carrier #2, and the CAZAC sequence group index #25 with the component carrier #3 from PDSCH of the component carrier #1, and notifies the extracted indexes to the controller 303.

The example 2 is advantageous from a viewpoint of power consumption because the user equipments for performing the carrier aggregation can grasp the CAZAC sequence groups being used when they receive PBCH and/or PDSCH of one component carrier. Additionally, the user equipments of LTE at least can make communication in the component carriers to which the CAZAC sequence groups being used are notified.

(Example 3)

The example 3 will be explained below. The example 3 notifies the information associated with the CAZAC sequence groups to be used, through one certain component carrier similarly to the example 2. However, differently from the example 2, the control signals that are transmitted with the resource of PDSCH to be designated by PBCH of one component carrier include the CAZAC sequence group index that is employed in the above component carrier, and a difference with the CAZAC sequence group index that is employed in other component carriers. Further, the CAZAC sequence group index to be employed in the above component carrier and the difference of the index may be incorporated in PBCH.

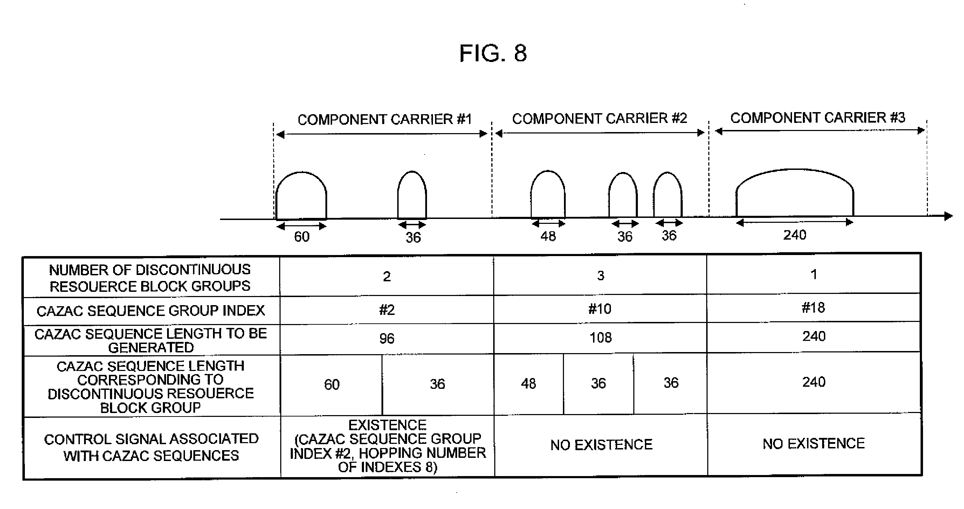

The example 3 will be specifically explained by employing Fig. 8. Herein, the case of transmitting the control information with the component carrier # 1 is explained. Thus, #2, being the CAZAC sequence group index that is used in the component carrier #1, and 8, being a difference of the index, are notified through PDSCH of the component carrier #1. In this case, the CAZAC sequence group indexes #2+#8=#10 and #2+#8+#8=#18 are used in the component carriers #2 and #3, respectively.

The control information extractor 302 of the user equipment 300 recognizes the component carriers #1 to #3 that are used in its own station, and at first, with the component carrier #1, extracts the CAZAC sequence group index #2 and 8, being a difference of the index, from PDSCH of the component carrier #1. And, with the component carrier #2, the control information extractor 302 recognizes the CAZAC sequence group index #10 from 8, being a difference of the index with the CAZAC sequence group index #2 that is used in the component carrier #1. Likewise, with the component carrier #3, the control information extractor 3 02 recognizes the CAZAC sequence group index #18 from 8, being a difference of the index with the CAZAC sequence group index #10 that is used in the component carrier #2.

The example 3, similarly to the example 2, is advantageous from a viewpoint of power consumption because the user equipments for performing the carrier aggregation can grasp the CAZAC sequence groups being used when they receive PBCH and PDSCH of one component carrier. In addition, in the example 3, the overhead of the control signals associated with the CAZAC sequences can be made small. Additionally, the user equipments of LTE at least can make communication in the component carriers to which the CAZAC sequence groups being used are notified.

(Example 4)

The example 4 will be explained below. The example 4 notifies the information associated with the CAZAC sequence groups to be used, through one certain component carrier similarly to the example 2 and the example 3. However, differently from the example 2 and the example 3, the control signal generator 210 of the base station 200 writes down, into the control signals that are transmitted with the resource of PDSCH to be designated by PBCH of one component carrier, the CAZAC sequence group index that is employed in the above component carrier. Further, the control signal generator 210 may write down the CAZAC sequence group index that is employed in the above component carrier into PBCH.

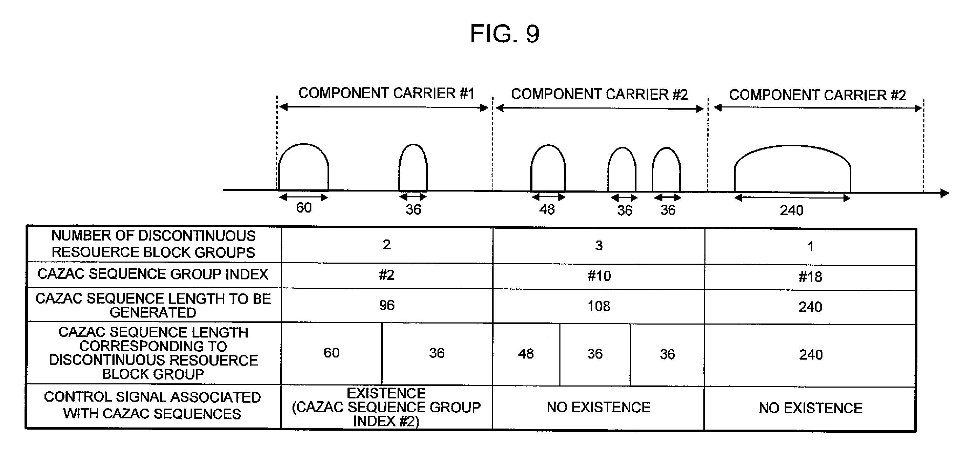

The example 4 will be specifically explained by employing Fig. 9. Herein, the case of transmitting the control information with the component carrier #1 is explained. Thus, #2, being the CAZAC sequence group index that is used in the component carrier #1 is notified through PDSCH of the component carrier #1. In this case, it is necessary to previously define modification patterns of the CAZAC sequence group indexes that are used in the component carriers #2 and #3. For example, upon defining a change number of the index as 30/(component carrier number), it follows that the change number of the index modification is 10 because the number of the component carriers is three. Thus, in the component carriers #2 and #3, it is recognized that the CAZAC sequence group indexes are #2+10=#12, and #2+10+10 =#22, respectively.

In the example 4, similarly to the example 2 and the example 3, the user equipments for performing the carrier aggregation can grasp the CAZAC sequence groups being used when they receive PBCH and PDSCH of one component carrier. For this, the example 4 is advantageous from a viewpoint of power consumption. In addition, in the example 4, the overhead of the control signals associated with the CAZAC sequences can be made small because the CAZAC sequence group index of one component carrier is transmitted and the CAZAC sequence group indexes of the other component carriers are not transmitted. Additionally, the user equipments of LTE at least can make communication in the component carriers to which the CAZAC sequence groups are notified.

(A second exemplary embodiment)

In the second exemplary embodiment of the present invention, the case in which while allocation to the user equipments is made so that the user equipments can make communication by employing a plurality of the component carriers, the carrier aggregation is not performed is employed for explanation.

A schematic configuration of the base stations in the second exemplary embodiment is identical to that of the base stations in the first exemplary embodiment shown in Fig. 3, so explanation is omitted.

A schematic configuration of the user equipments in the second exemplary embodiment is almost identical to that of the user equipments in the first exemplary embodiment shown in Fig. 4. A difference point is that, in the second exemplary embodiment, the CAZAC sequence number generator 304, the DFT unit 305, the cyclic extender 306, the data generator 307, the DFT unit 308, the subcarrier mapping unit 309, and the IFFT unit 310 perform, for one component carrier to be used, the processes that they performed for respective component carriers in the first exemplary embodiment.

Additionally, the second exemplary embodiment may perform the process identical to the first exemplary embodiment by inserting 0 (zero) into the reference signals of the component carriers that are not used.

This exemplary embodiment makes it possible to cope with the communication employing a single component carrier and the wireless communication employing a plurality of the component carriers.

The above-mentioned effect of the present invention will be explained by employing Fig. 11. The explanation is made on the condition that the number of the component carriers is two and the number of the subcarriers of each component carrier is 60. A plotting is made in the case of allocating the continuous resources within the component carriers, and in the case of allocating the discontinuous resources within the component carriers (division into the subcarrier number 24 and the subcarrier number 36). It is assumed that the CAZAC sequence group indexes to be employed in each component carrier are values shown in a lateral axis when the present invention is not applied, and it is assumed that the CAZAC sequence group indexes are values shown in the lateral axis, and (values shown in the lateral axis +15), respectively, when the present invention is applied. It can be seen from Fig. 11 that applying the present invention makes it possible to reduce Cubic Metric by 1 to 2.5 dB at the time of allocating the continuous resources, and by 0.5 to 1.5 dB at the time of allocating the discontinuous resources. Herein Cubic Meteric, which is calculated from the amplitude to 3rd power, is an index equivalent to PAPR.

While the transmission employing three component carriers was explained in the examples above, the similar effect can be obtained so long as the number of the component carriers is two or more.

While the uplink was explained in the examples above, the above examples are applicable to the downlink as well. Further, while the configuration in conformity to LTE-advanced was employed for explanation, the configuration is not limited hereto, and the examples are applicable to the system employing multicarriers such as i-Burst, Wimax, CDMA 2000 3x and MC-HSDPA (Multi Carrier High Speed Downlink Packet Access)

Further, while the CAZAC sequence was employed as the reference signal sequence, the reference signal sequence is not limited hereto, and could be an M sequence, a gold sequence or the like.

Further, while it is also possible that the above-described base stations and terminals of the present invention are configured of hardware, they can be also realized with a computer program. In the case of such a configuration, a processor that operates under a program filed in a program memory realizes a function and an operation similar to the function and the operation of the above-described exemplary embodiments. Additionally, it is also possible to realize one part of the function of the above-described exemplary embodiments with the computer program.

The present invention makes it possible to cope with the communication employing a single component carrier and the wireless communication employing a plurality of the component carriers. Further, PAPR of the reference signals can be made small because there is no possibility that the identical CAZAC sequence is used among the component carriers when a plurality of the component carriers are employed.

The above-mention present invention is generally applicable to the mobile wireless system for aggregating and using a plurality of the component carriers.

(Supplementary note 1) A wireless communication system, characterized in employing a different signal sequence in each carrier in communication employing a plurality of carriers, and in employing the aforementioned signal sequence as reference signals.

(Supplementary note 2) The wireless communication system according to Supplementary note 1, **characterized in that** the signal sequence to be employed in each carrier is decided by the signal sequence that is notified carrier by carrier.

(Supplementary note 3) The wireless communication system according to Supplementary note 1, **characterized in that** the signal sequence to be employed in each carrier is decided by information associated with the signal sequence that is notified to anyone of the aforementioned plurality of carriers.

(Supplementary note 4) The wireless communication system according to Supplementary note 3, **characterized in that** the aforementioned information associated with the signal sequence is the signal sequence that is employed in each carrier.

(Supplementary note 5) The wireless communication system according to Supplementary note 3, **characterized in that** the aforementioned information associated with the signal sequence is the signal sequence that is employed in anyone of the aforementioned plurality of carriers, and difference information indicative of a difference with the above signal sequence.

(Supplementary note 6) The wireless communication system according to Supplementary note 3, **characterized in that** the aforementioned information associated with the signal sequence is the signal sequence that is employed in anyone of the aforementioned plurality of carriers, and in that the signal sequences to be employed in other carriers are derived with patterns previously defined.

(Supplementary note 7) The wireless communication system according to one of Supplementary note 1 to Supplementary note 6, **characterized in that** the aforementioned signal sequence is defined by a format.

(Supplementary note 8) A base station, characterized in employing a different signal sequence in each carrier in communication employing a plurality of carriers, and in employing the aforementioned signal sequence as reference signals.

(Supplementary note 9) The base station according to Supplementary note 8, **characterized in that** the signal sequence to be employed in each carrier is decided by the signal sequence that is notified carrier by carrier.

(Supplementary note 10) The base station according to Supplementary note 8, **characterized in that** the signal sequence to be employed in each carrier is decided by information associated with the signal sequence that is notified to anyone of the aforementioned plurality of carriers.

(Supplementary note 11) The base station according to Supplementary note 10, **characterized in that** the aforementioned information associated with the signal sequence is the signal sequence that is employed in each carrier.

(Supplementary note 12) The base station according to Supplementary note 10, **characterized in that** the aforementioned information associated with the signal sequence is the signal sequence that is employed in anyone of the aforementioned plurality of carriers, and difference information indicative of a difference with the above signal sequence.

(Supplementary note 13) The base station according to Supplementary note 10, **characterized in that** the aforementioned information associated with the signal sequence is the signal sequence that is employed in anyone of the aforementioned plurality of carriers, and in that the signal sequences to be employed in other carriers are derived with patterns previously defined.

(Supplementary note 14) The base station according to one of Supplementary note 8 to Supplementary note 13, **characterized in that** the aforementioned signal sequence is defined by a format.

(Supplementary note 15) A terminal, characterized in employing a different signal sequence in each carrier in communication employing a plurality of carriers, and in employing the aforementioned signal sequence as reference signals.

(Supplementary note 16) The terminal according to Supplementary note 15, **characterized in that** the signal sequence to be employed in each carrier is decided by the signal sequence that is notified carrier by carrier.

(Supplementary note 17) The terminal according to Supplementary note 15, **characterized in that** the signal sequence to be employed in each carrier is decided by information associated with the signal sequence that is notified to anyone of the aforementioned plurality of carriers.

(Supplementary note 18) The terminal according to Supplementary note 17, **characterized in that** the aforementioned information associated with the signal sequence is the signal sequence that is employed in each carrier.

(Supplementary note 19) The terminal according to Supplementary note 17, **characterized in that** the aforementioned information associated with the signal sequence is the signal sequence that is employed in anyone of the aforementioned plurality of carriers, and difference information indicative of a difference with the above signal sequence.

(Supplementary note 20) The terminal according to Supplementary note 17, **characterized in that** the aforementioned information associated with the signal sequence is the signal sequence that is employed in anyone of the aforementioned plurality of carriers, and in that the signal sequences to be employed in other carriers are derived with patterns previously defined.

(Supplementary note 21) The terminal according to one of Supplementary note 15 to Supplementary note 20, **characterized in that** the aforementioned signal sequence is defined by a format.

(Supplementary note 22) A wireless communication method, characterized in employing a different signal sequence in each carrier in communication employing a plurality of carriers, and in employing the aforementioned signal sequence as reference signals.

(Supplementary note 23) The wireless communication method according to Supplementary note 22, **characterized in that** the signal sequence to be employed in each carrier is decided by the signal sequence that is notified carrier by carrier.

(Supplementary note 24) The wireless communication method according to Supplementary note 22, **characterized in that** the signal sequence to be employed in each carrier is decided by information associated with the signal sequence that is notified to anyone of the aforementioned plurality of carriers.

(Supplementary note 25) The wireless communication method according to Supplementary note 24, **characterized in that** the aforementioned information associated with the signal sequence is the signal sequence that is employed in each carrier.

(Supplementary note 26) The wireless communication method according to Supplementary note 24, **characterized in that** the aforementioned information associated with the signal sequence is the signal sequence that is employed in anyone of the aforementioned plurality of carriers, and difference information indicative of a difference with the above signal sequence.

(Supplementary note 27) The wireless communication method according to Supplementary note 24, **characterized in that** the aforementioned information associated with the signal sequence is the signal sequence that is employed in anyone of the aforementioned plurality of carriers, and in that the signal sequences to be employed in other carriers are derived with patterns previously defined.

(Supplementary note 28) The wireless communication method according to one of Supplementary note 22 to Supplementary note 27, **characterized in that** the aforementioned signal sequence is defined by a format.

(Supplementary note 29) A program of a base station, characterized in causing the aforementioned base station to execute a process of employing a different signal sequence in each carrier in communication employing a plurality of carriers, and employing the aforementioned signal sequence as reference signals.

(Supplementary note 30) A program of a terminal, characterized in causing the aforementioned terminal to execute a process of employing a different signal sequence in each carrier in communication employing a plurality of carriers, and employing the aforementioned signal sequence as reference signals.

[REFERENCE SIGNS LIST]

200    base station

201    wireless communication unit

202    controller

203    cyclic prefix remover

204    IFFT unit

205    subcarrier demapping unit

206    channel estimator

207    frequency equalizer

208    IDFT unit

209    data signal demodulator

210    control signal generator

300    user equipment

301    wireless communication unit

302    control information extractor

303    controller

304    CAZAC sequence number generator

305    DFT unit

306    cyclic extender

307    data generator

308    DFT unit

309    subcarrier mapping unit

310    IFFT unit

311    signal synthesizer

312    cyclic prefix adder

**Claims**

1.  A wireless communication system, employing a different signal sequence in each carrier in communication employing a plurality of carriers, and employing said signal sequence as reference signals.

2.  A wireless communication system according to claim 1, wherein the signal sequence to be employed in each carrier is decided by the signal sequence that is notified carrier by carrier.

3.  A wireless communication system according to claim 1, wherein the signal sequence to be employed in each carrier is decided by information associated with the signal sequence that is notified to anyone of said plurality of carriers.

4. A wireless communication system according to claim 3, wherein said information associated with the signal sequence is the signal sequence that is employed in each carrier.

5. A wireless communication system according to claim 3, wherein said information associated with the signal sequence is the signal sequence that is employed in anyone of said plurality of carriers, and difference information indicative of a difference with the above signal sequence.

6. A wireless communication system according to claim 3,
wherein said information associated with the signal sequence is the signal sequence that is employed in anyone of said plurality of carriers; and
wherein the signal sequences to be employed in other carriers are derived with patterns previously defined.

7. A wireless communication system according to one of claim 1 to claim 6, wherein said signal sequence is defined by a format.

8. A base station, employing a different signal sequence in each carrier in communication employing a plurality of carriers, and employing said signal sequence as reference signals.

9. A base station according to claim 8, wherein the signal sequence to be employed in each carrier is decided by the signal sequence that is notified carrier by carrier.

10. A base station according to claim 8, wherein the signal sequence to be employed in each carrier is decided by information associated with the signal sequence that is notified to anyone of said plurality of carriers.

11. A base station according to claim 10, wherein said information associated with the signal sequence is the signal sequence that is employed in each carrier.

12. A base station according to claim 10, wherein said information associated with the signal sequence is the signal sequence that is employed in anyone of said plurality of carriers, and difference information indicative of a difference with the above signal sequence.

13. A base station according to claim 10,
wherein said information associated with the signal sequence is the signal sequence that is employed in anyone of said plurality of carriers; and
wherein the signal sequences to be employed in other carriers are derived with patterns previously defined.

14. A base station according to one of claim 8 to claim 13, wherein said signal sequence is defined by a format.

15. A terminal, employing a different signal sequence in each carrier in communication employing a plurality of carriers, and employing said signal sequence as reference signals.

16. A terminal according to claim 15, wherein the signal sequence to be employed in each carrier is decided by the signal sequence that is notified carrier by carrier.

17. A terminal according to claim 15, wherein the signal sequence to be employed in each carrier is decided by information associated with the signal sequence that is notified to anyone of said plurality of carriers.

18. A terminal according to claim 17, wherein said information associated with the signal sequence is the signal sequence that is employed in each carrier.

19. A terminal according to claim 17, wherein said information associated with the signal sequence is the signal sequence that is employed in anyone of said plurality of carriers, and difference information indicative of a difference with the above signal sequence.

20. A terminal according to claim 17,
wherein said information associated with the signal sequence is the signal sequence that is employed in anyone of said plurality of carriers; and
wherein the signal sequences to be employed in other carriers are derived with patterns previously defined.

**21.** A terminal according to one of claim 15 to claim 20, wherein said signal sequence is defined by a format.

**22.** A wireless communication method, comprising employing a different signal sequence in each carrier in communication employing a plurality of carriers, and employing said signal sequence as reference signals.

**23.** A wireless communication method according to claim 22, wherein the signal sequence to be employed in each carrier is decided by the signal sequence that is notified carrier by carrier.

**24.** A wireless communication method according to claim 22, wherein the signal sequence to be employed in each carrier is decided by information associated with the signal sequence that is notified to anyone of said plurality of carriers.

**25.** A wireless communication method according to claim 24, wherein said information associated with the signal sequence is the signal sequence that is employed in each carrier.

**26.** A wireless communication method according to claim 24, wherein said information associated with the signal sequence is the signal sequence that is employed in anyone of said plurality of carriers, and difference information indicative of a difference with the above signal sequence.

**27.** A wireless communication method according to claim 24,
wherein said information associated with the signal sequence is the signal sequence that is employed in anyone of said plurality of carriers; and
wherein the signal sequences to be employed in other carriers are derived with patterns previously defined.

**28.** A wireless communication method according to one of claim 22 to claim 27, wherein said signal sequence is defined by a format.

**29.** A program of a base station, said program causing said base station to execute a process of employing a different signal sequence in each carrier in communication employing a plurality of carriers, and employing said signal sequence as reference signals.

**30.** A program of a terminal, said program causing said terminal to execute a process of employing a different signal sequence in each carrier in communication employing a plurality of carriers, and employing said signal sequence as reference signals.

# FIG. 1

CAZAC SEQUENCE
SUBJECTED TO DFT
(SEQUENCE LENGTH L)

| 1 | 2 | 3 | 4 | 5 | | L |

CAZAC SEQUENCE
SUBJECTED TO CYCLIC
EXTENSION (SEQUENCE
LENGTH L+2)

| 1 | 2 | 3 | 4 | 5 | | L | 1 | 2 |

# FIG. 2

BASE STATION
200_1

BASE STATION
200_N

USER
EQUIPMENT
300_1

USER
EQUIPMENT
300_2

USER
EQUIPMENT
300_N-1

USER
EQUIPMENT
300_N

# FIG. 3

BASE STATION 200

CONTROL SIGNAL GENERATOR (210)

WIRELESS COMMUNICATION UNIT (201)

CONTROLLER (202)

CYCLIC PREFIX REMOVER (203)

IFFT UNIT (204-1)

SUBCARRIER DEMAPPING UNIT (205-1)

CHANNEL ESTIMATOR (206-1)

FREQUENCY EQUALIZER (207-1)

IDFT UNIT (208-1)

DATA SIGNAL DEMODULATOR (209-1)

IFFT UNIT (204-N)

SUBCARRIER DEMAPPING UNIT (205-N)

CHANNEL ESTIMATOR (206-N)

FREQUENCY EQUALIZER (207-N)

IDFT UNIT (208-N)

DATA SIGNAL DEMODULATOR (209-N)

EP 2 418 793 A1

# FIG. 4

# FIG. 5

COMPONENT CARRIER #1 | COMPONENT CARRIER #2 | COMPONENT CARRIER #3

60  36  48  36  36  240

| | COMPONENT CARRIER #1 | | COMPONENT CARRIER #2 | | | COMPONENT CARRIER #3 |
|---|---|---|---|---|---|---|
| NUMBER OF DISCONTINUOUS RESOUERCE BLOCK GROUPS | 2 | | 3 | | | 1 |
| CAZAC SEQUENCE GROUP INDEX | #2 | | #10 | | | #25 |
| CAZAC SEQUENCE LENGTH TO BE GENERATED | 96 | | 108 | | | 240 |
| CAZAC SEQUENCE LENGTH CORRESPONDING TO DISCONTINUOUS RESOUERCE BLOCK GROUP | 60 | 36 | 48 | 36 | 36 | 240 |

EP 2 418 793 A1

FIG. 6

| NUMBER OF DISCONTINUOUS RESOUERCE BLOCK GROUPS | 2 | | 3 | | | 1 |
|---|---|---|---|---|---|---|
| CAZAC SEQUENCE GROUP INDEX | #2 | | #10 | | | #25 |
| CAZAC SEQUENCE LENGTH TO BE GENERATED | 96 | | 108 | | | 240 |
| CAZAC SEQUENCE LENGTH CORRESPONDING TO DISCONTINUOUS RESOUERCE BLOCK GROUP | 60 | 36 | 48 | 36 | 36 | 240 |
| CONTROL SIGNAL ASSOCIATED WITH CAZAC SEQUENCES | EXISTENCE (CAZAC SEQUENCE GROUP INDEX #2) | | EXISTENCE (CAZAC SEQUENCE GROUP INDEX #10) | | | EXISTENCE (CAZAC SEQUENCE GROUP INDEX #25) |

EP 2 418 793 A1

## FIG. 7

| | COMPONENT CARRIER #1 | | COMPONENT CARRIER #2 | | | COMPONENT CARRIER #3 |
|---|---|---|---|---|---|---|
| NUMBER OF DISCONTINUOUS RESOUERCE BLOCK GROUPS | 2 | | 3 | | | 1 |
| CAZAC SEQUENCE GROUP INDEX | #2 | | #10 | | | #18 |
| CAZAC SEQUENCE LENGTH TO BE GENERATED | 96 | | 108 | | | 240 |
| CAZAC SEQUENCE LENGTH CORRESPONDING TO DISCONTINUOUS RESOUERCE BLOCK GROUP | 60 | 36 | 48 | 36 | 36 | 240 |
| CONTROL SIGNAL ASSOCIATED WITH CAZAC SEQUENCES | EXISTENCE (CAZAC SEQUENCE GROUP INDEX #2, #10, #25) | | NO EXISTENCE | | | NO EXISTENCE |

EP 2 418 793 A1

## FIG. 8

| | COMPONENT CARRIER #1 | | COMPONENT CARRIER #2 | | | COMPONENT CARRIER #3 |
|---|---|---|---|---|---|---|
| NUMBER OF DISCONTINUOUS RESOUERCE BLOCK GROUPS | 2 | | 3 | | | 1 |
| CAZAC SEQUENCE GROUP INDEX | #2 | | #10 | | | #18 |
| CAZAC SEQUENCE LENGTH TO BE GENERATED | 96 | | 108 | | | 240 |
| CAZAC SEQUENCE LENGTH CORRESPONDING TO DISCONTINUOUS RESOUERCE BLOCK GROUP | 60 | 36 | 48 | 36 | 36 | 240 |
| CONTROL SIGNAL ASSOCIATED WITH CAZAC SEQUENCES | EXISTENCE (CAZAC SEQUENCE GROUP INDEX #2, HOPPING NUMBER OF INDEXES 8) | | NO EXISTENCE | | | NO EXISTENCE |

EP 2 418 793 A1

## FIG. 9

|  | COMPONENT CARRIER #1 | | COMPONENT CARRIER #2 | | | COMPONENT CARRIER #2 |
|---|---|---|---|---|---|---|
| NUMBER OF DISCONTINUOUS RESOUERCE BLOCK GROUPS | 2 | | 3 | | | 1 |
| CAZAC SEQUENCE GROUP INDEX | #2 | | #10 | | | #18 |
| CAZAC SEQUENCE LENGTH TO BE GENERATED | 96 | | 108 | | | 240 |
| CAZAC SEQUENCE LENGTH CORRESPONDING TO DISCONTINUOUS RESOUERCE BLOCK GROUP | 60 | 36 | 48 | 36 | 36 | 240 |
| CONTROL SIGNAL ASSOCIATED WITH CAZAC SEQUENCES | EXISTENCE (CAZAC SEQUENCE GROUP INDEX #2) | | NO EXISTENCE | | | NO EXISTENCE |

# FIG. 10

# FIG. 11

# FIG. 12

START

NOTIFYING
- INFORMATION OF COMPONENT CARRIERS TO BE USED AND
- RESOURCE ALLOCATION INFORMATION

S1201

BASE STATION

RECOGNIZING SUBCARRIER NUMBER AND CAZAC SEQUENCES

S1202

GENERATING CAZAC SEQUENCES

S1203

DIVIDING CAZAC SEQUENCES

S1204

SYNTHESIZING DIVIDED REFERENCES WITH DATA SIGNALS

S1205

TRANSMISSION TO BASE STATIONS

S1206

USER EQUIPMENT

END

# EP 2 418 793 A1

<table>
<tr><th colspan="2">INTERNATIONAL SEARCH REPORT</th><th>International application No.</th></tr>
<tr><td colspan="2"></td><td>PCT/JP2010/054782</td></tr>
</table>

A. CLASSIFICATION OF SUBJECT MATTER
*H04J11/00*(2006.01)i, *H04L27/01*(2006.01)i, *H04W72/04*(2009.01)i

According to International Patent Classification (IPC) or to both national classification and IPC

B. FIELDS SEARCHED

Minimum documentation searched (classification system followed by classification symbols)
H04J11/00, H04L27/01, H04W72/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | LG Electronics, Issues on the physical cell ID allocation to the aggregated component carriers, 3GPP TSG RAN WG1 #55 R1-084195, 2008.11.10, '3. Distinct PCI per Component Carrier' | 1,7,8,14,15, 21,22,28-30<br>2-4,6,9-11, 13,16-18,20, 23-25,27 |
| Y | NTT DOCOMO, DL Layered Control Signal Structure in LTE-Advanced, 3GPP TSG RAN WG1 Meeting #54bis R1-083681, 2008.09.29 | 2-4,6,9-11, 13,16-18,20, 23-25,27 |

☐ Further documents are listed in the continuation of Box C.　　☐ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>　22 June, 2010 (22.06.10) | Date of mailing of the international search report<br>　29 June, 2010 (29.06.10) |
|---|---|
| Name and mailing address of the ISA/<br>　Japanese Patent Office | Authorized officer |
| Facsimile No. | Telephone No. |

Form PCT/ISA/210 (second sheet) (July 2009)

24

## INTERNATIONAL SEARCH REPORT

| | International application No. |
|---|---|
| | PCT/JP2010/054782 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
See the extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-4, 6-11, 13-18, 20-25, 27-30

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2010/054782 |

Continuation of Box No.III of continuation of first sheet(2)

Document 1 discloses a technique wherein in the field of communication using a plurality of carriers, signal sequences differing from carrier to carrier are used, and the signal sequences are used as reference signals. Therefore, the invention set forth in claim 1 is not novel in view of the invention disclosed in document 1 and does not involve a special technical feature. Consequently, the claims set forth two invention groups involving the following special technical features. The invention set forth in claim 1 not involving a special technical feature is classified into invention 1.

(Invention 1) the inventions set forth in claims 1-4, 6, 7, the inventions set forth in claims 8-11, 13-18, 20-25, 27-30 corresponding to the former inventions
The inventions set forth in the above claims relate to a technique wherein in the field of communication using a plurality of carriers, signal sequences differing from carrier to carrier are used, and the signal sequences are used as reference signals, and the inventions are the one wherein the signal sequence used for each carrier is notified by each carrier/one of the carriers. The inventions set forth in claims 2, 3 and the claims corresponding to the former claims are a mere or addition of well-known art to claim 1 and the corresponding claims (see document 2 and so forth), and a new effect is not produced. Therefore, the inventions are classified into invention 1. Since the feature of the inventions set forth in claim 6 and the corresponding claims is matter which can be properly modified when a person skilled in the art carries out the inventions, the inventions are classified into invention 1.

(Invention 2) the invention set forth in claim 5 and the inventions set forth in corresponding claims 12, 19, 26
The inventions set forth in the above claims relate to a technique wherein in the field of communication using a plurality of carriers, signal sequences differing from carrier to carrier are used, and the signal sequences are used as reference signals, and the inventions are the one wherein the difference between the signal sequences used for the carriers is notified by means of one of the carriers.

As described above, the inventions set forth in claims 1-30 do not comply with the requirement of unity of invention.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **B. M. Popovic.** Generalized Chirp-Like Polyphase Sequences with Optimum Correlation Properties. *IEEE Transactions on Information Theory,* July 1992, vol. 38 (4), 1406-1409